# EUROPÄISCHE PATENTSCHRIFT

(11) **EP 3 822 730 B1**
(45) Veröffentlichungstag und Bekanntmachung des Hinweises auf die Patenterteilung: **07.12.2022**
(21) Anmeldenummer: 20200113.7
(22) Anmeldetag: 06.08.2013
(51) Int. Cl.: G05D 1/02

(54) **VERFAHREN ZUM BETREIBEN EINES BODENREINIGUNGSGERÄTES UND BODENREINIGUNGSGERÄT**
METHOD FOR OPERATING A FLOOR-CLEANING DEVICE AND FLOOR-CLEANING DEVICE
PROCÉDÉ DE FONCTIONNEMENT D'UN APPAREIL DE NETTOYAGE DE SOL ET APPAREIL DE NETTOYAGE DE SOL

(43) Veröffentlichungstag der Anmeldung: 19.05.2021
(62) Teilanmeldung aus: 13747828.5
(73) Patentinhaber: robart GmbH, 4020 Linz (AT)
(72) Erfinder: Dünne, Markus, 48691 Vreden (DE); Schahpar, Michael, 4030 Linz (AT); Artes, Harold, 4100 Ottensheim (AT)
(74) Vertreter: DTS Patent- und Rechtsanwälte Schnekenbühl und Partner mbB

(56) Entgegenhaltungen:
- KR-B1- 100 730 311
- US-A1- 2005 171 636
- US-A1- 2012 109 376

## Beschreibung

Die Erfindung betrifft ein Verfahren zum Betreiben eines selbstfahrenden und selbstlenkenden Bodenreinigungsgerätes, wobei in einer Speichereinheit des Bodenreinigungsgerätes mindestens eine Karte mindestens eines zu reinigenden Raumes speicherbar ist sowie ein von einem Benutzer vorgebbarer Reinigungsplan mit einem oder mehreren Reinigungsaufträgen, wobei einem bestimmten, anhand einer Karte identifizierbaren Raum mindestens ein Reinigungsauftrag zugewiesen wird und das Bodenreinigungsgerät in einem Raum platziert wird.

Außerdem betrifft die Erfindung ein selbstfahrendes und selbstlenkendes Bodenreinigungsgerät zur Durchführung des Verfahrens, umfassend ein Fahrwerk zum Verfahren des Bodenreinigungsgerätes auf einer Bodenfläche, eine Reinigungseinheit zum Reinigen der Bodenfläche, eine mit dem Fahrwerk und der Reinigungseinheit gekoppelte Steuereinheit und eine mit dieser gekoppelte Speichereinheit, in der mindestens eine Karte mindestens eines zu reinigenden Raumes speicherbar ist sowie ein von einem Benutzer vorgebbarer Reinigungsplan mit einem oder mehreren Reinigungsaufträgen, wobei einem bestimmten, anhand einer Karte identifizierbaren Raum mindestens ein Reinigungsauftrag zugewiesen wird, und wobei das Bodenreinigungsgerät eine mit der Steuereinheit gekoppelte Sensoreinheit aufweist.

Die US 6,667,592 B2 beschreibt ein Bodenreinigungsgerät zum autonomen Reinigen von Räumen. Das Bodenreinigungsgerät ist in der Lage, Karten von Räumen, in denen es sich befindet, selbsttätig zu erstellen und diesen zugeordnet zu speichern. Karten können auch von einem Benutzer vorgegeben werden. Den Räumen oder Teilen davon, die anhand der jeweiligen Karte identifiziert werden können, können Reinigungsaufträge zugewiesen werden. Anhand von Sensoren kann das Bodenreinigungsgerät seine Position in einem Raum ermitteln und den diesem Raum zugewiesenen Reinigungsauftrag ausführen.

Auch in der WO 2009/132317 A1 ist ein Bodenreinigungsgerät beschrieben, das in dem Raum, in dem es platziert ist, einen vorgegebenen Reinigungsauftrag ausführen kann. Im Reinigungsauftrag kann beispielsweise die Art und Intensität der Reinigung oder ein Reinigungspfad vorgegeben sein sowie Reinigungsmuster, um eine möglichst flächendeckende Reinigung zu erzielen.

Die KR 10-0730311 B1 beschreibt einen Reinigungsroboter, der vor der Reinigung eine Orientierungsfahrt durchführt, um seine Umgebung zu erfassen. Dabei können Stationen anhand von an den Roboter übertragenen Signalen erkannt werden, die den Raum, in dem sie sich jeweils befinden, als zu reinigenden Raum kennzeichnen. Der Roboter erstellt während der Erkundungsfahrt eine Karte der Umgebung und reinigt anschließend die Räume anhand einer vorgegebenen Reihenfolge.

Die US 2012/0109376 A1 beschreibt ein selbstfahrendes und selbstlenkendes Bodenreinigungsgerät, in dem eine Karte gespeichert ist. Das Gerät benutzt einen optischen Sensor, um Merkmale zu erfassen, die der Bestimmung innerhalb der Karte dienen. Das Gerät prüft, ob seine Umgebung gereinigt oder nicht gereinigt ist. Ein nicht gereinigter Bereich wird gereinigt. Wenn der Bereich bereits gereinigt wurde, sucht das Bodenreinigungsgerät nach einem nicht gereinigten Bereich.

Eine weitere Ausführungsform eines selbstfahrenden und selbstlenkenden Bodenreinigungsgerätes ist in der US 2005/0171636 A1 beschrieben.

Aufgabe der vorliegenden Erfindung ist es, ein Verfahren und ein Bodenreinigungsgerät der eingangs genannten Art bereitzustellen, das eine effiziente Abarbeitung des Reinigungsplans ermöglicht.

Diese Aufgabe wird durch ein erfindungsgemäßes Verfahren mit den Merkmalen von Anspruch 1 gelöst.

Beim erfindungsgemäßen Verfahren ist vorgesehen, dass vom Bodenreinigungsgerät eine Überprüfung daraufhin durchgeführt wird, ob es sich in dem bestimmten Raum befindet, dem im Reinigungsplan ein Reinigungsauftrag zugewiesen ist. Stellt das Bodenreinigungsgerät fest, dass es sich nicht in dem bestimmten Raum befindet, sondern in einem davon unterschiedlichen Raum, nimmt das Bodenreinigungsgerät eine Änderung des Reinigungsplans vor, wobei der dem bestimmten Raum zugeordnete Reinigungsauftrag in einer Abfolge von Reinigungsaufträgen im Reinigungsplan nach hinten verschoben wird oder aus dem Reinigungsplan gelöscht wird. Alternativ oder ergänzend wird die Ausführung des dem bestimmten Raum zugewiesenen Reinigungsauftrags unterlassen, unterbrochen oder beendet. Eine Arbeit des Bodenreinigungsgerätes entgegen dem Reinigungsplan kann dadurch vermieden und Arbeitszeit des Bodenreinigungsgerätes eingespart werden. Energie, die zur Abarbeitung des unzutreffenden Reinigungsauftrags eingesetzt würde, kann dadurch eingespart werden. Die Betriebsdauer des Bodenreinigungsgerätes, und damit eine mögliche weitere Abarbeitung des Reinigungsplans, werden damit möglichst wenig beeinträchtigt.

Das erfindungsgemäße Verfahren erweist sich insbesondere dann als vorteilhaft, wenn der bestimmte Raum, dem ein Reinigungsauftrag zugewiesen ist, und der Raum, in dem das Bodenreinigungsgerät platziert wird, so physisch voneinander getrennt sind, dass sich das Bodenreinigungsgerät nicht selbsttätig in den bestimmten Raum bewegen kann. Dies ist insbesondere dann der Fall, wenn die beiden Räume in unterschiedlichen Etagen eines Gebäudes oder in unterschiedlichen Gebäuden angeordnet sind.

Von Vorteil ist es, wenn vom Bodenreinigungsgerät vor Beginn der Ausführung des Reinigungsauftrags festgestellt wird, ob sich das Bodenreinigungsgerät in dem bestimmten Raum befindet. Dies erlaubt es, eine Verschwendung von Zeit und Energie zur Ausführung eines falschen Reinigungsauftrags zu vermeiden. Auch eine möglicherweise sogar schadhafte Bearbeitung des Raumes, in dem sich das Bodenreinigungsgerät befindet, kann dadurch vermieden werden.

Vorzugsweise wird bei negativer Feststellung eine Mitteilung hierüber vom Bodenreinigungsgerät an den Benutzer gesendet. Beispielsweise kann das Bodenreinigungsgerät dem Benutzer mitteilen, dass es sich nicht in dem bestimmten Raum befindet, um den Reinigungsauftrag auszuführen, und dass es sich insbesondere nicht aufgrund physischer Begrenzungen in den bestimmten Raum bewegen kann. Der Benutzer kann dann zum Beispiel das Bodenreinigungsgerät außer Betrieb setzen, ihm einen anderen Reinigungsauftrag oder Reinigungsplan zuweisen oder das Bodenreinigungsgerät in den bestimmten Raum transportieren.

Von Vorteil ist es, wenn bei negativer Feststellung vom Bodenreinigungsgerät eine Änderung des Reinigungsplans vorgenommen wird. Das Bodenreinigungsgerät kann den Reinigungsplan selbstständig umstellen, um dessen Abarbeitung zu ermöglichen und insbesondere möglichst effizient zu gestalten.

Gemäß einem Aspekt der Erfindung wird der Reinigungsauftrag, der dem bestimmten Raum zugewiesen ist, beispielsweise aus dem Reinigungsplan gelöscht oder in einer Abfolge von Reinigungsaufträgen im Reinigungsplan nach hinten verschoben. "Nach hinten verschoben" ist vorliegend insbesondere so aufzufassen, dass der Reinigungsauftrag nicht gelöscht wird, in der Abfolge auszuführender Reinigungsaufträge jedoch zu einem späteren Zeitpunkt auszuführen ist. Das Bodenreinigungsgerät kann sich dadurch gewissermaßen merken, dass der Reinigungsauftrag noch nicht oder nicht vollständig ausgeführt wurde. Dementsprechend kann das Bodenreinigungsgerät zu einem späteren Zeitpunkt erneut versuchen, den Reinigungsauftrag auszuführen.

Besonders günstig ist es, wenn vom Bodenreinigungsgerät ermittelt wird, ob eine Karte desjenigen Raumes in der Speichereinheit gespeichert ist, in dem es positioniert ist, und ob der Reinigungsplan einen diesem Raum zugewiesenen Reinigungsauftrag aufweist und wenn bejahendenfalls dieser Reinigungsauftrag ausgeführt wird. Der Reinigungsplan kann dadurch effizient abgearbeitet werden. Das Bodenreinigungsgerät kann, darauf wird nachfolgend noch eingegangen, Merkmale des Raumes oder darin angeordneter Gegenstände erfassen. Das Bodenreinigungsgerät kann ermitteln, ob in der Speichereinheit eine Karte gespeichert ist, die dem Raum zugeordnet ist, in dem es sich befindet. Weiter kann das Bodenreinigungsgerät ermitteln, ob diesem Raum ein Reinigungsauftrag im Reinigungsplan zugewiesen ist. Anstelle des unterlassenen, unterbrochenen oder beendeten Reinigungsauftrages kann dieser andere Reinigungsauftrag ausgeführt und die Abarbeitung des Reinigungsplans fortgesetzt werden.

Vorteilhafterweise wird das zuletzt erwähnte Ausführungsbeispiel des Verfahrens ausgeführt, wenn die Räume physisch voneinander getrennt sind und physische Begrenzungen in den den Räumen zugeordneten Karten vorhanden sind. Aufgrund der physisch voneinander getrennten Räume, die sich insbesondere in unterschiedlichen Stockwerken eines Gebäudes befinden können, ist es dem Bodenreinigungsgerät nicht möglich, sich selbstständig zu dem bestimmten Raum zu bewegen. Stattdessen kann der von Raum, in dem es positioniert ist, mit dem weiteren Reinigungsauftrag bearbeitet werden.

Bei einem weiteren vorteilhaften Ausführungsbeispiel des erfindungsgemäßen Verfahrens ist es günstig, wenn bei negativer Feststellung eine Reinigung desjenigen Raums durchgeführt wird, in dem sich das Bodenreinigungsgerät befindet, unabhängig davon, ob der Reinigungsplan einen diesem Raum zugewiesenen Reinigungsauftrag aufweist. Beispielsweise kann im Bodenreinigungsgerät ein Reinigungsgrundprogramm gespeichert sein, gemäß dem ein beliebiger Raum mangels eines gesonderten Reinigungsauftrags gereinigt werden kann. Das Bodenreinigungsgerät kann zufällig reinigen, beispielsweise auf Kollision fahrend, teilgeplant oder vollständig geplant reinigen. Bei einer teilgeplanten Reinigung reinigt das Bodenreinigungsgerät beispielsweise ein Bodenflächensegment nach einem vorgegebenen Muster und verfährt dann zu einem weiteren Bodenflächensegment, um dies ebenfalls nach dem gleichen Muster zu reinigen. Bei einer vollständig geplanten Reinigung kann das Bodenreinigungsgerät von dem Raum, in dem es platziert ist, zunächst eine Karte erstellen und abhängig von der Karte einen Reinigungsauftrag zur möglichst flächendeckenden und vollständigen Reinigung des Raumes erstellen und ausführen. Es kann vorgesehen sein, dass bei der Reinigung des Raumes aufgrund negativer Feststellung alle Reinigungswerkzeuge oder nur ein Teil der Reinigungswerkzeuge des Bodenreinigungsgerätes zum Einsatz kommen und/oder dass mit einer bestimmten, vorgebbaren Reinigungsintensität gereinigt wird.

Zur Ermittlung, in welchem Raum sich das Bodenreinigungsgerät befindet, kann vorzugsweise zumindest eines der folgenden herangezogen werden:
- Die Position des Raumes in mindestens einer räumlichen Dimension, insbesondere der geographischen Höhe, Länge und/oder Breite; als Höheninformation kann auch eine Druckinformation angesehen werden, beispielweise des Luftdrucks;
- die Orientierung des Raumes, beispielsweise die Orientierung von Wänden des Raumes in Bezug auf eine Himmelsrichtung;
- Merkmale von Begrenzungen des Raumes wie beispielsweise Wänden, Bodenfläche, Decke, Ecken, Kanten, Schwellen, Türen, Fenstern;
- Merkmale einer Bodenfläche des Raumes, insbesondere deren Beschaffenheit wie beispielsweise Fliesen, Teppichboden, Parkett, Linoleum etc.;
- Merkmale von im Raum angeordneten oder von diesem umfassten Gegenständen, beispielsweise Einrichtungsgegenständen, Steckdosen, Heizkörpern, Gardinen, wobei insbesondere Merkmale einer im Raum angeordneten Lade- und/oder Entleerungsstation für das Bodenreinigungsgerät herangezogen werden können. Eine Station zum Laden und/oder Entleeren des Bodenreinigungsgerätes weist beispielsweise eine Markierung oder Merkmale auf, die vom Bodenreinigungsgerät in Kombination mit der Karte des Raumes gespeichert werden können, so dass bei Erkennen der Station eine Identifizierung des Raumes möglich ist.

Im Raum angeordnete Gegenstände werden bevorzugt anhand mindestens einer Markierung oder einer Kennzeichnung erkannt, die vom Bodenreinigungsgerät erfasst wird. Die Markierungen oder Kennzeichnungen können beispielsweise optisch, magnetisch, akustisch, taktil oder per Funk wahrnehmbar sein. Träger von Markierungen oder Kennzeichnungen können Gegenstände im Raum sein, die Signale (beispielsweise sichtbares Licht, Infrarot, RFID, Ultraschall) emittieren können. Die Gegenstände können auch entsprechende Signale, die vom Bodenreinigungsgerät ausgesandt werden (beispielsweise sichtbares Licht, Infrarot, RFID, Ultraschall) reflektieren, wodurch eine Erfassung der Gegenstände möglich ist. Die Gegenstände mit Kennzeichnung oder Markierungen können separate, im Raum angeordnete Markierungsträger sein, die von einem Benutzer im Raum platziert werden, beispielsweise Markierungspfosten, Markierungswürfel oder Markierungshütchen.

Zur Ermittlung, in welchem Raum sich das Bodenreinigungsgerät befindet, werden vom Bodenreinigungsgerät vorzugsweise mindestens ein Höhensensor (beispielsweise ein Drucksensor oder GPS-Sensor), ein Positionssensor (beispielsweise ein GPS-Sensor), ein Kompasssensor, ein optischer Sensor (beispielsweise ein Laserscanner oder eine Digitalkamera), ein Magnetfeldsensor, ein akustischer Sensor (beispielsweise ein Ultraschallsensor), ein elektromagnetischer Sensor (beispielsweise ein RFID-Sender und/oder Empfänger) und/oder ein taktiler Sensor eingesetzt. Ein Sensorsignal des mindestens einen Sensors kann vom Bodenreinigungsgerät ausgewertet werden. Im Sensorsignal enthaltene Informationen können zur Identifikation von Merkmalen des Raums und darin enthaltenen Gegenständen herangezogen werden.

Die Informationen des Sensors oder der Sensoren können auch dazu genutzt werden, Karten von Räumen zu erstellen, die in der Speichereinheit diesen Räumen zugeordnet gespeichert werden können.

Von Vorteil ist es, wenn die Signale von zwei oder mehr Sensoren dahingehend analysiert werden, ob sich das Bodenreinigungsgerät in dem bestimmten Raum befindet, und eine negative Feststellung erst dann getroffen wird, wenn die Analyse der Signale der zwei oder mehr Sensoren das Ergebnis liefert, dass dies nicht der Fall ist. Dies gibt die Möglichkeit, eine Plausibilitätsprüfung durchzuführen. Dadurch kann zuverlässiger festgestellt werden, ob sich das Bodenreinigungsgerät in dem bestimmten Raum befindet. Erst wenn anhand der Signale von mindestens zwei Sensoren übereinstimmend festgestellt werden kann, dass dies nicht der Fall ist, wird die Ausführung des Reinigungsauftrags unterlassen, unterbrochen oder beendet.

Bevorzugt ist eine Höheninformation in Kombination mit oder als Bestandteil einer Karte eines Raumes gespeichert. Die Höheninformation, beispielsweise eine geographische Höhe oder eine Druckinformation, die insbesondere mit dem Luftdruck verknüpft sein kann, ermöglicht es insbesondere, das Verfahren zur Unterscheidung von Räumen in unterschiedlichen Stockwerken eines Gebäudes einzusetzen. Dies ist selbst dann möglich, wenn Räume in unterschiedlichen Stockwerken einen gleichen Zuschnitt aufweisen und auch ansonsten sämtliche Merkmale der Räume identisch sind. Durch Überprüfung der Höheninformation bei der Abarbeitung des Reinigungsplans kann das Bodenreinigungsgerät ermitteln, dass es sich im falschen Stockwerk befindet, und die Ausführung eines Reinigungsauftrags unterlassen, unterbrechen oder beenden.

Wie bereits erwähnt, kann vorgesehen sein, dass Karten von Räumen vom Bodenreinigungsgerät erstellt und mit den jeweiligen Räumen verknüpft in der Speichereinheit gespeichert werden. Dabei können sämtliche der vorstehend erwähnten Sensoren herangezogen werden, um die ebenfalls vorstehend erwähnten Merkmale des Raumes oder darin enthaltener Gegenstände zu erfassen und in der Karte zu speichern. Zu einem späteren Zeitpunkt können diese Merkmale vom Bodenreinigungsgerät erneut erfasst werden. Die Steuereinheit kann durch Vergleich der erfassten und gespeicherten Merkmale feststellen, in welchem Raum sich das Bodenreinigungsgerät befindet.

Wie bereits erwähnt, betrifft die Erfindung auch ein Bodenreinigungsgerät. Ein erfindungsgemäßes Bodenreinigungsgerät zur Durchführung eines der vorstehenden Verfahren mit den Merkmalen von Anspruch 15 löst die der Erfindung zugrunde liegende Aufgabe.

Die bereits im Zusammenhang mit der Erläuterung des erfindungsgemäßen Verfahrens erzielbaren Vorteile können unter Einsatz des Bodenreinigungsgerätes ebenfalls erzielt werden. Zur Vermeidung von Wiederholungen kann auf voranstehende Erläuterungen verwiesen werden.

Ebenfalls kann verwiesen werden auf die Merkmale vorteilhafter Ausführungsformen des erfindungsgemäßen Verfahrens, die bei vorteilhaften Ausführungsformen des erfindungsgemäßen Bodenreinigungsgerätes ebenfalls vorhanden oder umgesetzt sein können.

Günstig ist es, wenn vor Beginn der Ausführung des Reinigungsauftrags festgestellt wird, ob sich das Bodenreinigungsgerät in dem bestimmten Raum befindet, damit Zeit und Energie eingespart werden können und möglicherweise eine schadhafte Reinigung des Raumes, in dem sich das Bodenreinigungsgerät befindet, vermieden werden kann.

Das Bodenreinigungsgerät umfasst vorzugsweise eine mit der Steuereinheit gekoppelte Kommunikationseinheit, wobei bei negativer Feststellung eine Mitteilung hierüber an den Benutzer aussendbar ist. Beispielsweise kann über die Kommunikationseinheit eine drahtlose Kommunikationsverbindung aufgebaut werden, zum Beispiel über WLAN und das Internet oder über eine Telekommunikationsverbindung.

Die Kommunikationseinheit kann eine Eingabeeinheit umfassen oder bilden, über die der Benutzer Bedienanweisungen vorgeben kann. Beispielsweise können Reinigungspläne eingegeben werden und/oder Karten von Räumen an das Bodenreinigungsgerät übertragen werden.

Bei negativer Feststellung wird von der Steuereinheit vorzugsweise eine Änderung des Reinigungsplans vorgenommen.

Vorteilhafterweise wird der Reinigungsauftrag aus dem Reinigungsplan gelöscht oder in einer Abfolge von Reinigungsaufträgen im Reinigungsplan nach hinten verschoben.

Besonders günstig ist es, wenn von der Steuereinheit ermittelbar ist, ob eine Karte zu demjenigen Raum in der Speichereinheit gespeichert ist, in dem das Bodenreinigungsgerät positioniert ist, und ob der Reinigungsplan einen diesem Raum zugewiesenen Reinigungsauftrag aufweist, und wenn bejahendenfalls dieser Reinigungsauftrag vom Bodenreinigungsgerät ausgeführt wird. Der Reinigungsplan kann dadurch effizient abgearbeitet werden, indem er vom Bodenreinigungsgerät selbsttätig umgestellt wird. Es kann ein Reinigungsauftrag ausgeführt werden, der demjenigen Raum zugeordnet ist, in dem sich das Bodenreinigungsgerät gerade befindet.

Vorteilhafterweise wird der Reinigungsauftrag dann ausgeführt, wenn die Räume physisch voneinander getrennt sind und physische Begrenzungen in den den Räumen zugeordneten Karten vorhanden sind.

Von Vorteil ist es, wenn vom Bodenreinigungsgerät bei negativer Feststellung eine Reinigung desjenigen Raumes durchführbar ist, in dem sich das Bodenreinigungsgerät befindet, unabhängig davon, ob der Reinigungsplan einen diesem Raum zugewiesenen Reinigungsauftrag aufweist. Beispielsweise wird ein Reinigungsgrundprogramm ausgeführt, wie dies bereits vorstehend erläutert wurde.

Zur Ermittlung, in welchem Raum sich das Bodenreinigungsgerät befindet, wird insbesondere mindestens eines der folgenden herangezogen:
- Die Position des Raumes in mindestens einer räumlichen Dimension, insbesondere der geographischen Höhe, Länge und/oder Breite, einschließlich einer Höheninformation beispielsweise in Form einer Druckinformation;
- die Orientierung des Raumes;
- Merkmale von Begrenzungen des Raumes;
- Merkmale einer Bodenfläche des Raumes;
- Merkmale von im Raum angeordneten oder von diesem umfassten Gegenständen, insbesondere Merkmale einer im Raum angeordneten Lade- und/oder Entleerungsstation für das Bodenreinigungsgerät.

Im Raum angeordnete Gegenstände werden bevorzugt anhand mindestens einer Markierung oder einer Kennzeichnung erkannt, die vom Bodenreinigungsgerät mit der Sensoreinheit erfassbar sind.

Die Sensoreinheit umfasst bevorzugt mindestens einen Höhensensor (beispielsweise einen Drucksensor oder GPS-Sensor), einen Positionssensor (beispielsweise einen GPS-Sensor), einen Kompasssensor, einen optischen Sensor (beispielsweise ein Laserscanner oder eine Digitalkamera), einen Magnetfeldsensor, einen akustischen Sensor (beispielsweise ein Ultraschallsensor), einen elektromagnetischen Sensor (beispielsweise einen RFID-Sender und/oder Empfänger) und/oder einen taktilen Sensor. Mit dem mindestens einen Sensor können insbesondere Merkmale des Raumes und/oder darin angeordneter Gegenstände erfasst werden, um eine Karte des Raumes einschließlich der Gegenstände zu erstellen. Dies ermöglicht die Feststellung des Bodenreinigungsgerätes, in welchem Raum es sich befindet. Zudem können vom Bodenreinigungsgerät selbsttätig Karten der Räume erstellt werden.

Günstig ist es, wenn die Signale von zwei oder mehr Sensoren der Sensoreinheit von der Steuereinheit dahingehend analysierbar sind, ob sich das Bodenreinigungsgerät in dem bestimmten Raum befindet, und eine negative Feststellung erst dann getroffen wird, wenn die Analyse der zwei oder mehr Sensoren das Ergebnis liefert, dass dies nicht der Fall ist. Die Signale von zwei oder mehr Sensoren können hinsichtlich ihrer Plausibilität überprüft werden.

Vorzugsweise ist eine Höheinformation in Kombination mit oder als Bestandteil einer Karte eines Raums speicherbar. Die Höheninformation kann beispielsweise eine geographische Höhe oder eine Druckinformation sein, wobei ein entsprechender Sensor beispielsweise als GPS-Sensor oder als Drucksensor ausgestaltet sein kann.

Karten von Räumen können vom Bodenreinigungsgerät vorzugsweise selbsttätig erstellbar und mit den jeweiligen Räumen verknüpft in der Speichereinheit speicherbar sein.

Das Bodenreinigungsgerät ist beispielsweise ein Saugroboter, ein Kehr-Saug-Roboter, eine selbstfahrende und selbstlenkende Kehrmaschine oder eine selbstfahrende und selbstlenkende Scheuersaugmaschine.

Die nachfolgende Beschreibung bevorzugter Ausführungsformen der Erfindung dient im Zusammenhang mit der Zeichnung der näheren Erläuterung der Erfindung. Es zeigen:
- Figur 1:: eine perspektivische Darstellung eines erfindungsgemäßen Bodenreinigungsgerätes, ausgestaltet als Kehr-Saug-Roboter;
- Figur 2:: ein schematisches Blockdiagramm des Bodenreinigungsgerätes aus Figur 1;
- Figur 3:: eine schematische Darstellung von drei zu reinigenden Räumen, deren zugeordnete Karten in einer Speichereinheit des Bodenreinigungsgerätes aus Figur 1 gespeichert sind;
- Figur 4:: eine schematische Darstellung eines mehrstöckigen Gebäudes, in dem das Bodenreinigungsgerät aus Figur 1 unterschiedliche Räume reinigen kann und
- Figur 5:: eine schematische Darstellung von zwei Lade- und/oder Entleerungsstationen für das Bodenreinigungsgerät aus Figur 1 mit Markierungen.

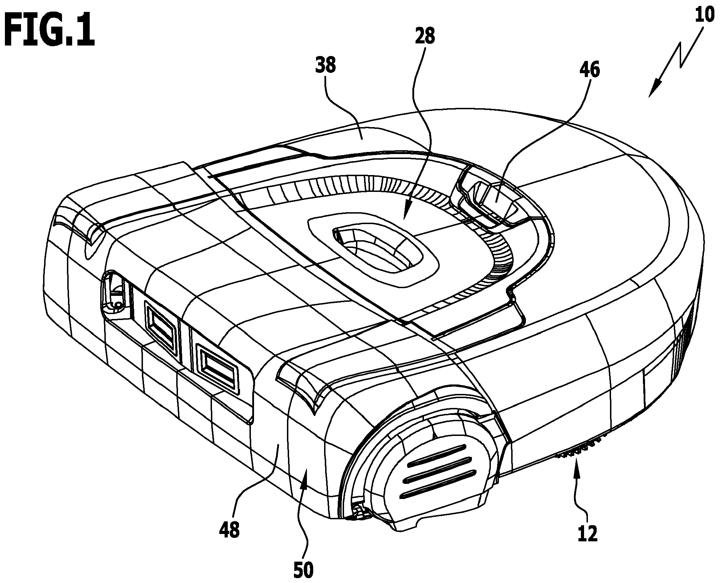

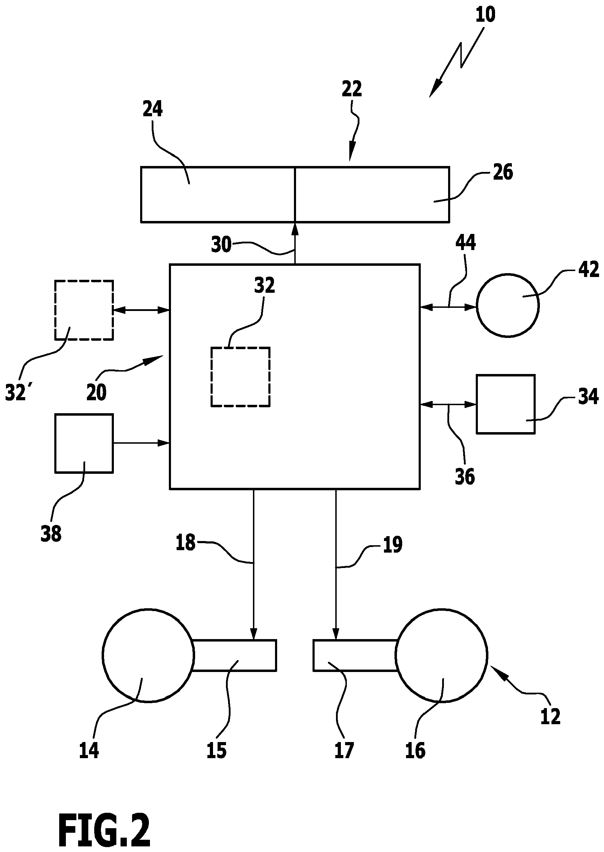

Figur 1 zeigt in perspektivischer Darstellung eine mit dem Bezugszeichen 10 belegte vorteilhafte Ausführungsform eines erfindungsgemäßen Bodenreinigungsgerätes, dessen Blockdiagramm in Figur 2 schematisch dargestellt ist. Das Bodenreinigungsgerät 10 ist vorliegend ausgestaltet als selbstfahrendes und selbstlenkendes Bodenreinigungsgerät, als sogenannter Reinigungsroboter. Mit dem Bodenreinigungsgerät 10 können Bodenflächen autonom gereinigt werden.

Zum Verfahren auf Bodenflächen umfasst das Bodenreinigungsgerät 10 ein Fahrwerk 12, das vorliegend zwei Antriebsräder 14, 16 aufweist. Den Antriebsrädern 14, 16 sind Antriebsmotoren 15 bzw. 17 zugeordnet, die über Steuerleitungen 18 bzw. 19 von einer Steuereinheit 20 des Bodenreinigungsgerätes 10 angesteuert werden können. Die Steuereinheit 20 kann das Fahrwerk 12 ansteuern, das Bodenreinigungsgerät 10 zufällig oder gemäß einem vorgebbaren Reinigungspfad oder Reinigungsmuster zu verfahren.

Weiter weist das Bodenreinigungsgerät 10 eine Reinigungseinheit 22 auf. Die Reinigungseinheit 22 umfasst insbesondere eine antreibbare Reinigungsbürste 24. Diese ist beispielsweise um eine quer zur Längsrichtung des Bodenreinigungsgerätes 10 ausgerichtete Drehachse drehend antreibbar. Mit der Reinigungsbürste kann Schmutz von der zu reinigenden Bodenfläche abgelöst werden.

Außerdem umfasst die Reinigungseinheit 22 ein Saugaggregat 26. Schmutz kann unter der Saugwirkung des Saugaggregates 26 von der Bodenfläche abgesaugt und in einem Schmutzsammelbehälter 28 abgeschieden werden. Das Bodenreinigungsgerät 10 ist dementsprechend ein Kehr-Saug-Roboter.

Die Reinigungseinheit 24 ist von der Steuereinheit 20 über eine Steuerleitung 30 ansteuerbar. Beispielsweise können die Reinigungsbürste 24 und/oder das Saugaggregat 26 aktiviert oder deaktiviert werden. Die Drehzahl der Reinigungsbürste 24 und/oder die Leistung des Saugaggregates 26 können verändert werden.

Das Bodenreinigungsgerät 10 weist ferner eine Speichereinheit 32 auf, die mit der Steuereinheit 20 gekoppelt ist. Die Speichereinheit 32 ist, dies schließt die Kopplung ein, im vorliegenden Fall in die Steuereinheit 20 integriert. Die Speichereinheit 32 könnte jedoch auch getrennt von der Steuereinheit 20 gebildet und mit dieser über eine bidirektionale Leitung gekoppelt sein (gezeigt als Speichereinheit 32' in Figur 2).

In der Speichereinheit 32 können Karten von Räumen gespeichert werden, welche Räume von Bodenreinigungsgerät 10 gereinigt werden können. Die Karten umfassen Merkmale der Räume und/oder von in den Räumen gegebenenfalls angeordneten Gegenständen. Anhand der Merkmale der Räume oder der Merkmale der Gegenstände kann das Bodenreinigungsgerät 10 feststellen, in welchem Raum es sich befindet. Darauf wird nachfolgend noch eingegangen.

Weiter kann in der Speichereinheit 32 mindestens ein Reinigungsplan gespeichert werden. Ein Reinigungsplan, beispielsweise ein Wochenreinigungsprogramm, kann einen Reinigungsauftrag oder mehrere Reinigungsaufträge aufweisen. Der Reinigungsauftrag oder die Reinigungsaufträge ist bzw. sind einem bestimmten Raum zugeordnet. Jeder Reinigungsauftrag kann mindestens eine Aufgabe für das Bodenreinigungsgerät 10 umfassen, den dem Reinigungsauftrag zugeordneten Raum in vorgegebener Weise zu reinigen. Einem Raum kann mehr als nur ein Reinigungsauftrag zugewiesen sein.

Abhängig vom Reinigungsauftrag kann die Steuereinheit 20 das Fahrwerk 12 und/oder die Reinigungseinheit 22 ansteuern, den Reinigungsauftrag auszuführen. Beispielsweise kann vorgesehen sein, den Raum entsprechend einem vorgegebenen Reinigungspfad oder Reinigungsmuster abzufahren und dabei zu reinigen. Es kann vorgesehen sein, bestimmte Bereiche des Raumes intensiver zu reinigen als andere Bereiche. Bestimmte Bereiche des Raumes können von der Reinigung ausgenommen werden. Der Raum kann je nach Beschaffenheit einer Bodenfläche unterschiedlich gereinigt werden. Der Raum kann zufällig, teilgeplant oder vollständig geplant gereinigt werden. Abhängig vom Reinigungsauftrag kann der Raum oder Bereiche davon unterschiedlich gereinigt werden, was den Einsatz der Reinigungseinheit 22 angeht. Beispielsweise werden bestimmte Teile eines Raums nur gekehrt, nur gesaugt oder sowohl gesaugt als auch gekehrt.

Das Bodenreinigungsgerät 10 umfasst ferner eine Kommunikationseinheit 34, die mit der Steuereinheit 20 über eine bidirektionale Steuer- und Signalleitung 36 gekoppelt ist. Über die Kommunikationseinheit 34 kann ein Benutzer Bedienanweisungen am Bodenreinigungsgerät 10 vornehmen. Der Benutzer kann dem Bodenreinigungsgerät 10 Karten von Räumen bereitstellen. Der Benutzer kann Reinigungspläne erstellen und Reinigungsaufträge definieren. Die Reinigungsaufträge können Räumen zugewiesen werden.

Die Kommunikationseinheit 34 ermöglicht eine drahtlose und/oder kontaktbehaftete Kommunikation des Benutzers mit dem Bodenreinigungsgerät 10. Beispielsweise weist die Kommunikationseinheit 34 eine Schnittstelle auf zu einer Funk-Kommunikationsverbindung über ein Telekommunikationsnetz oder das Internet (beispielsweise über WLAN). Die Kommunikationseinheit 34 kann eine Eingabeeinheit 38 aufweisen, die zum Beispiel an einem Gehäuse des Bodenreinigungsgerätes 10 angeordnet ist. Die Eingabeeinheit 38 kann Bedienelemente umfassen.

Das Bodenreinigungsgerät 10 kann über die Kommunikationseinheit 34 Mitteilungen an den Benutzer senden, indem diese von der Steuereinheit 20 entsprechend angesteuert wird. Mitteilungen werden beispielsweise über eine Telekommunikationsverbindung und/oder über das Internet an den Benutzer gesendet.

Weiter umfasst das Bodenreinigungsgerät 10 eine Sensoreinheit 42. Die Sensoreinheit 42 ist mit der Steuereinheit 20 über eine bidirektionale Steuer- und Signalleitung 44 gekoppelt. Signale mindestens eines Sensors können über die Steuer- und Signalleitung 44 an die Steuereinheit 20 übertragen werden, welche ihrerseits die Sensoreinheit 42 ansteuern kann.

Die Sensoreinheit 42 umfasst vorliegend mindestens einen und bevorzugt eine Vielzahl von Sensoren, insbesondere einen Höhensensor zum Ermitteln einer Höheninformation. Der Höhensensor ist beispielsweise ein GPS-Sensor oder ein Drucksensor. Weiter umfasst die Sensoreinheit 42 beispielsweise einen Positionssensor, insbesondere einen GPS-Sensor, oder einen Kompasssensor. Ferner kann ein optischer Sensor 46 vorgesehen sein. Der optische Sensor umfasst zum Beispiel einen Laserscanner und/oder eine Kamera, insbesondere eine Digitalkamera. "Sensor" schließt dementsprechend vorliegend den Fall mit ein, dass vom Bodenreinigungsgerät 10 ein Signal emittiert wird und ein darauf beruhendes reflektiertes Signal oder Antwortsignal von dem entsprechenden Sensor wieder detektiert wird. Beispielsweise kann mit dem optischen Sensor 46 eine Umgebung des Bodenreinigungsgerätes 10 scannend abgetastet werden.

Die Sensoreinheit 42 kann ferner einen akustischen Sensor aufweisen, beispielsweise einen Ultraschallsensor, welcher einen Ultraschallempfänger und/oder -emitter aufweisen kann.

Ferner umfasst die Sensoreinheit 42 zum Beispiel einen elektromagnetischen Sensor zum Aussenden und/oder Empfangen elektromagnetischer Strahlung wie insbesondere RFID-Signalen.

Ferner kann ein taktiler Sensor 48, beispielsweise ein Gehäuseteil in Gestalt eines Stoßfängers 50 des Bodenreinigungsgerätes 10, Bestandteil der Sensoreinheit 42 sein.

Signale der Sensoreinheit 42 können von der Steuereinheit 20 untersucht und ausgewertet werden.

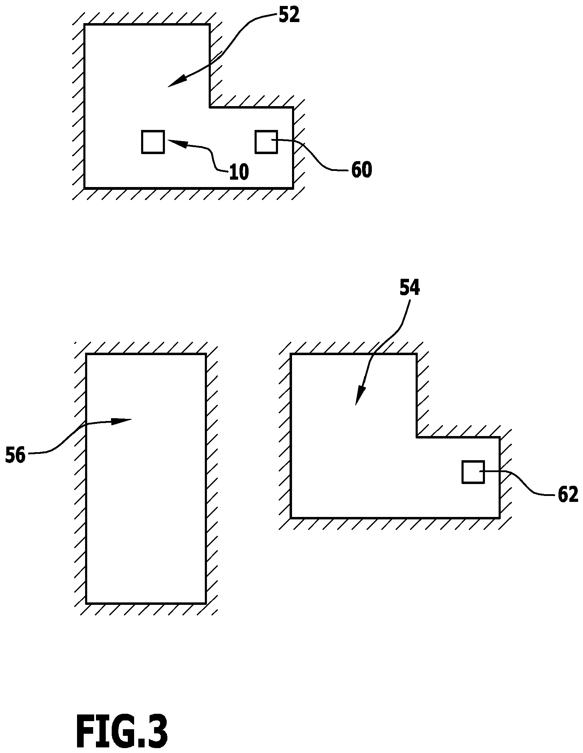

Figur 3 zeigt beispielhaft drei Räume 52, 54, 56, zu denen in der Speichereinheit 32 Karten im Bodenreinigungsgerät 10 gespeichert sind. Figur 3 kann daher auch als Darstellung von drei Karten angesehen werden, die den Räumen 52, 54, 56 zugeordnet sind. Die Karten der Räume 52, 54, 56 können vom Bodenreinigungsgerät 10 selbst erstellt worden sein oder diesem vom Benutzer bereitgestellt worden sein. Bei der Erstellung der Karten können Merkmale der Räume 52, 54, 56 oder darin enthaltener Gegenstände unter Einsatz der Sensoreinheit 42 erfasst und die diesbezüglichen Signale von der Steuereinheit 20 ausgewertet werden, um die Karte einschließlich darin enthaltener Gegenstände zu erstellen.

Merkmale der Räume 52, 54, 56, die zur Erzeugung der Karte herangezogen werden können, sind beispielsweise Wände des Raumes, Kanten, Ecken, Schwellen, Decken, Türen, Fenster, die Beschaffenheit des Bodens, Gardinen, Heizkörper, Leuchten und Lampen, Einrichtungsgegenstände, Markierungen wie beispielsweise Markierungspfosten, -hütchen oder -würfel, Steckdosen oder dergleichen. Insbesondere kann auch die Position des Raumes, insbesondere dessen geographische Länge und/oder Breite und/oder Höhe zur Kennzeichnung eines Raumes 52, 54, 56 herangezogen werden. Eine Höheninformation kann insbesondere auch eine Druckinformation sein, die zusammen mit der Karte des jeweiligen Raumes 52, 54, 56 gespeichert wird.

Umgekehrt können in den Karten der Räume 52, 54, 56 enthaltene Merkmale vom Bodenreinigungsgerät 10 herangezogen werden, um festzustellen, in welchem Raum 52, 54, 56 sich das Bodenreinigungsgerät befindet. Insbesondere ist es auch für das Bodenreinigungsgerät 10 möglich festzustellen, ob dem Raum, in dem es sich befindet, eine Karte in der Speichereinheit 32 zugeordnet ist. Zu diesem Zweck kann das Bodenreinigungsgerät 10 über die Sensoreinheit 42 eine Untersuchung des entsprechenden Raumes vornehmen, und Signale der Sensoren der Sensoreinheit 42 können von der Steuereinheit 20 auf Merkmale untersucht werden, die auf Vorhandensein in den in der Speichereinheit 32 gespeicherten Karten überprüft werden.

Bei einem vorteilhaften Ausführungsbeispiel des erfindungsgemäßen Verfahrens ist es für den Benutzer möglich, dem Bodenreinigungsgerät 10 einen Reinigungsplan mit mindestens einem Reinigungsauftrag vorzugeben. Beispielsweise weist der Reinigungsplan den Reinigungsauftrag für das Bodenreinigungsgerät 10 auf, den Raum 52 zu reinigen. Wird das Bodenreinigungsgerät 10 im Raum 52 platziert, kann das Bodenreinigungsgerät 10 anhand der ihm bekannten Merkmale des Raumes 52, die in der entsprechenden Karte gespeichert sind, feststellen, dass es sich im Raum 52 befindet. Der Reinigungsauftrag kann vom Bodenreinigungsgerät 10 ausgeführt und der Reinigungsplan abgearbeitet werden.

Im vorliegenden Beispiel enthält der Reinigungsplan den Reinigungsauftrag, zunächst den Raum 54 zu reinigen und anschließend einen Reinigungsauftrag für den Raum 52. Für den Raum 56 liegt beispielsweise kein Reinigungsauftrag vor.

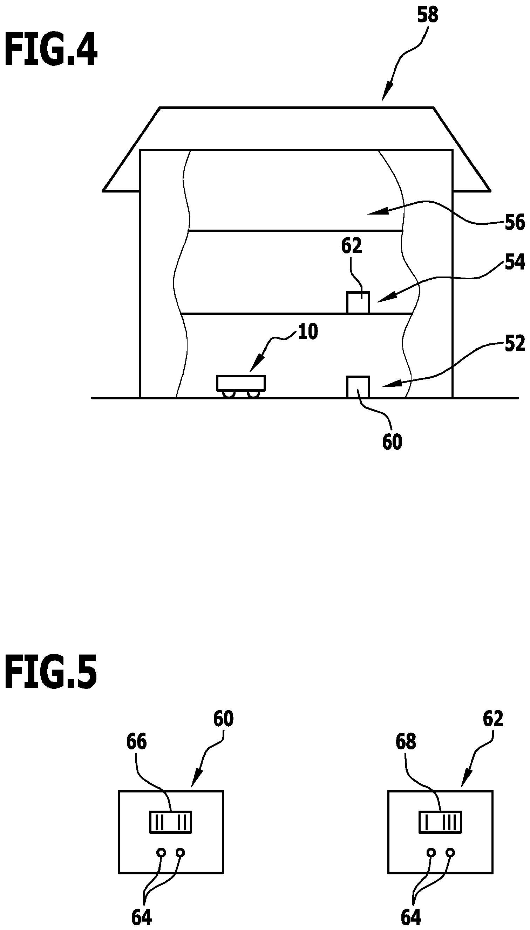

Das Bodenreinigungsgerät 10 wird vom Benutzer im Raum 52 positioniert, der allerdings durch physische Begrenzungen vom Raum 54 getrennt ist. Beispielsweise liegen die Räume 52, 54 und 56 in unterschiedlichen Stockwerken eines Gebäudes 58 (Figur 4). Es besteht für das selbstfahrende und selbstlenkende Bodenreinigungsgerät 10 keine Möglichkeit, von Raum 52 in den Raum 54 zu gelangen.

Bei einem vorteilhaften Ausführungsbeispiel des erfindungsgemäßen Verfahrens stellt das Bodenreinigungsgerät fest, in welchem Raum es sich befindet. Anhand der in der Karte gespeicherten Merkmale kann das Bodenreinigungsgerät 10 ermitteln, dass es sich im Raum 52 befindet. Demgegenüber sieht der Reinigungsplan vor, zunächst den Reinigungsauftrag für den Raum 54 auszuführen. Die Feststellung, dass sich das Bodenreinigungsgerät 10 im Raum 54 befindet, ist dementsprechend negativ.

Erfindungsgemäß wird die Ausführung des dem Raum 54 zugeordneten Reinigungsauftrages vom Bodenreinigungsgerät 10 unterlassen, unterbrochen oder beendet. Besonders bevorzugt stellt das Bodenreinigungsgerät 10 vor Beginn des Reinigungsauftrages fest, ob es sich im Raum 54 befindet. Die im vorliegenden Fall negative Feststellung veranlasst das Bodenreinigungsgerät 10, den diesem Raum 54 zugeordneten Reinigungsauftrag nicht auszuführen, d. h. zu unterlassen. Da die Räume 52 und 54 sich in unterschiedlichen Stockwerken im Gebäude 58 befinden, kann das Bodenreinigungsgerät 10 sich auch nicht in den Raum 54 bewegen, um den Reinigungsauftrag auszuführen.

Das Bodenreinigungsgerät 10 kann vorliegend selbsttätig eine Änderung des vom Benutzer vorgegebenen Reinigungsplans vornehmen. Besonders bevorzugt kann das Bodenreinigungsgerät 10 feststellen, dass es sich im Raum 52 befindet, welchem ebenfalls ein Reinigungsauftrag vom Benutzer zugewiesen worden ist. Das Bodenreinigungsgerät 10 kann den Reinigungsauftrag, der dem Raum 54 zugewiesen ist, im Reinigungsplan nach hinten verschieben und zunächst den dem Raum 52 zugewiesenen Reinigungsauftrag ausführen. Dies ermöglicht es, den Reinigungsplan besonders effizient abzuarbeiten.

Ergänzend oder alternativ kann vom Bodenreinigungsgerät 10 über die Kommunikationseinheit 34 eine Mitteilung über die negative Feststellung an den Benutzer gesendet werden. Der Benutzer kann über die Kommunikationseinheit 34 den Reinigungsplan im Bodenreinigungsgerät 10 ändern oder löschen. Alternativ hat der Benutzer die Möglichkeit, das Bodenreinigungsgerät 10 vom Raum 52 in den Raum 54 zu transportieren, um zunächst den diesem Raum 54 zugewiesenen Reinigungsauftrag auszuführen.

Es kann auch vorgesehen sein, dass der Reinigungsplan vom Bodenreinigungsgerät 10 dahingehend selbsttätig geändert wird, dass der dem Raum 54 zugeordnete Reinigungsauftrag aus dem Reinigungsplan gelöscht wird. Der nachfolgende Reinigungsauftrag im Reinigungsplan ist dem Raum 52 zugewiesen, so dass zunächst dieser Reinigungsauftrag ausgeführt werden kann.

Bei einem weiteren vorteilhaften Ausführungsbeispiel des erfindungsgemäßen Verfahrens kann vorgesehen sein, dass der Reinigungsplan einen Reinigungsauftrag für den Raum 54 aufweist, nicht jedoch für den Raum 52, und dass sich das Bodenreinigungsgerät 10 im Raum 52 befindet. In diesem Fall kann das Bodenreinigungsgerät 10 auch in Abwesenheit eines Reinigungsauftrags eine Reinigung des Raumes 52 durchführen. Beispielsweise kann in der Speichereinheit 32 ein Reinigungsgrundprogramm gespeichert sein, welches vom Bodenreinigungsgerät 10 standardmäßig dann ausgeführt werden kann, wenn kein gesonderter Reinigungsauftrag vorliegt. Bei dem Reinigungsgrundprogramm kann das Bodenreinigungsgerät 10 beispielsweise auf Kollision fahren, teilgeplant oder vollständig geplant fahren und unter Einsatz sowohl der Reinigungsbürste 24 als auch des Saugaggregates 26 reinigen.

Befindet sich das Bodenreinigungsgerät 10 in einem Raum, dem in der Speichereinheit 32 keine Karte zugeordnet ist, kann das Bodenreinigungsgerät 10 vor Ausführung eines Reinigungsauftrags ebenfalls feststellen, dass es sich nicht in einem dem Reinigungsauftrag zugeordneten Raum befindet. Auch in diesem Fall kann das Bodenreinigungsgerät 10 ein Reinigungsgrundprogramm ausführen. Dabei kann das Bodenreinigungsgerät 10 simultan eine Karte dieses Raumes erstellen und in der Speichereinheit 32 speichern.

Es wird betont, dass die vorstehend erläuterten vorteilhaften Ausführungsbeispiele des erfindungsgemäßen Verfahrens nicht voraussetzen, dass drei Räume 52, 54, 56 vorhanden sind, die Räume 52, 54, 56 in demselben Gebäude 58 und in unterschiedlichen Stockwerken desselben liegen und/oder dass der Reinigungsplan nur einen oder zwei Reinigungsaufträge aufweist. Beispielsweise können zu reinigende Räume in derselben Etage eines Gebäudes 58 liegen oder in unterschiedlichen Gebäuden. Es kann jedem Raum ein Reinigungsauftrag zugewiesen sein, und es können weniger oder mehr als drei Räume vorhanden sein.

Als vorteilhaft erweist es sich, dass mit dem Bodenreinigungsgerät 10, das einen Höhensensor aufweisen kann, auch in unterschiedlichen Stockwerken des Gebäudes 58 liegende Räume 52, 54, 56 voneinander unterschieden können. Dies ist selbst dann möglich, siehe beispielsweise die Räume 52 und 54, wenn die Räume denselben Zuschnitt aufweisen und die Räume 52, 54 abgesehen von der Höheninformation identische Merkmale aufweisen, die auch in den ihnen zugeordneten Karten gespeichert sind. Anhand der Höheninformation, die in der Karte der Räume 52, 54 gespeichert ist, kann das Bodenreinigungsgerät 10 eine Erkennung desjenigen Stockwerkes vornehmen, in dem es angeordnet ist, und anhand dieser Erkennung auf den entsprechenden Raum 52, 54 schließen.

Die Figuren 3, 4 und 5 zeigen schematisch Stationen 60 und 62 zum Laden und/oder Entleeren des Bodenreinigungsgerätes 10. Die Station 60 ist im Raum 52 angeordnet, die Station 62 im Raum 54.

Das Bodenreinigungsgerät 10 kann elektrische Kontaktelemente 64 der jeweiligen Station 60, 62 kontaktieren, damit eine Batterie des Bodenreinigungsgerätes 10 geladen werden kann. Über eine in der Zeichnung nicht gezeigte Entladestelle kann der Schmutzsammelbehälter 28 geleert werden.

Die Stationen 60, 62 umfassen Markierungen 66 bzw. 68, die sich voneinander unterscheiden. Anhand dieses Unterschiedes kann das Bodenreinigungsgerät 10 feststellen, um welche Station 60 oder 62 es sich handelt. Dementsprechend kann das Bodenreinigungsgerät 10 anhand dieser Feststellung eine Zuordnung zum Raum 52 bzw. 54 treffen und feststellen, in welchem dieser Räume 52, 54 es sich befindet.

Die Markierungen 66, 68 sind beispielsweise reflektierende Elemente, die von der Sensoreinheit 42 ausgesandte Signale reflektieren, welche von der Sensoreinheit 42 wieder empfangen werden können. Die Markierung 66, 68 kann auch eine RFID-Kennzeichnung oder eine andersartige Form der Markierung sein, anhand derer die Stationen 60, 62 unterschieden werden können.

Es kann vorgesehen sein, dass der Benutzer das Bodenreinigungsgerät 10 zu Beginn der Abarbeitung eines Reinigungsplans vor einer Station 60 oder 62 positioniert, damit diese vom Bodenreinigungsgerät 10 erkannt und auf einfache Weise eine Zuordnung zum Raum 52, 54 getroffen werden kann.

Anstelle der Stationen 60, 62 können zur Kennzeichnung eines Raumes 52, 54, 56 auch, wie bereits erwähnt, andersartige Markierungselemente eingesetzt werden, beispielsweise Markierungspfosten, -hütchen oder -würfel.

Andere Formen der Kennzeichnung von Räumen 52, 54, 56 können beispielsweise über Matrix-Codes (beispielsweise QR-Codes), Barcodes oder RFID-Tags vorgenommen werden, die in den Räumen 52, 54 oder 56 angeordnet sind.

## Patentansprüche

1. Verfahren zum Betreiben eines selbstfahrenden und selbstlenkenden Bodenreinigungsgerätes, wobei in einer Speichereinheit (32) des Bodenreinigungsgerätes (10) mindestens eine Karte mindestens eines zu reinigenden Raumes (52, 54, 56) gespeichert ist sowie ein Reinigungsplan mit einem oder mehreren Reinigungsaufträgen, wobei einem bestimmten, anhand der mindestens einen Karte identifizierbaren Raum (52, 54, 56) mindestens ein Reinigungsauftrag zugewiesen wird und sich das Bodenreinigungsgerät (10) in einem Raum (52, 54, 56) befindet, **dadurch gekennzeichnet, dass** das Verfahren umfasst:
- bei der Abarbeitung des Reinigungsplans, Untersuchen, durch eine Steuereinheit (20) des Bodenreinigungsgerätes (10), mindestens eines Sensorsignals einer Sensoreinheit (42) des Bodenreinigungsgerätes (10) auf Merkmale kennzeichnend den Raum (52, 54, 56), in dem sich das Bodenreinigungsgerät (10) befindet;
- Überprüfen, ob die Merkmale in der mindestens einen in der Speichereinheit (32) gespeicherten Karte vorhanden sind;
- Feststellen, vor Beginn der oder bei der Ausführung des Reinigungsauftrags, ob es sich bei dem Raum (52, 54, 56), in dem sich das Bodenreinigungsgerät (10) befindet, um den bestimmten Raum (52, 54, 56) handelt; und, bei negativer Feststellung:
- Vornahme einer Änderung des Reinigungsplans durch das Bodenreinigungsgerät (12), wobei der dem bestimmten Raum (52, 54, 56) zugeordnete Reinigungsauftrag in einer Abfolge von Reinigungsaufträgen im Reinigungsplan nach hinten verschoben wird oder aus dem Reinigungsplan gelöscht wird; oder Prüfung, ob der bestimmte Raum (52, 54, 56) erreichbar ist; oder Unterlassen, Unterbrechen oder Beenden der Ausführung des dem bestimmten Raum (52, 54, 56) zugeordneten Reinigungsauftrags.

2. Verfahren nach Anspruch 1, **dadurch gekennzeichnet, dass** der Reinigungsplan in der Abfolge der auszuführenden Reinigungsaufträge abgearbeitet wird.

3. Verfahren nach einem der voranstehenden Ansprüche, **dadurch gekennzeichnet, dass** das Bodenreinigungsgerät (10) bei Vorliegen eines Reinigungsauftrags prüft, ob der Raum (52, 54, 56) erreichbar ist, um den Reinigungsauftrag auszuführen.

4. Verfahren nach Anspruch 3, **dadurch gekennzeichnet, dass** dann, wenn das Bodenreinigungsgerät den Raum (52, 54, 56) nicht erreichen kann, vom Bodenreinigungsgerät (10) eine Änderung des Reinigungsplans vorgenommen wird, insbesondere dass der Reinigungsauftrag aus dem Reinigungsplan gelöscht wird oder in einer Abfolge von Reinigungsaufträgen im Reinigungsplan nach hinten verschoben wird.

5. Verfahren nach einem der voranstehenden Ansprüche, **dadurch gekennzeichnet, dass** abhängig vom Reinigungsauftrag der Raum gemäß zumindest einem der Folgenden gereinigt wird:
- der Raum (52, 54, 56) wird entsprechend einem vorgegebenen Reinigungspfad oder Reinigungsmuster abgefahren und dabei gereinigt;
- bestimmte Bereiche des Raumes (52, 54, 56) werden intensiver gereinigt als andere Bereiche;
- bestimmte Bereiche des Raumes (52, 54, 56) werden von der Reinigung ausgenommen;
- der Raum (52, 54, 56) wird je nach Beschaffenheit einer Bodenfläche unterschiedlich gereinigt werden;
- der Raum (52, 54, 56) wird zufällig, teilgeplant oder vollständig geplant gereinigt werden;
- der Raum (52, 54, 56) oder Bereiche davon werden unterschiedlich gereinigt, was den Einsatz einer Reinigungseinheit des Bodenreinigungsgerätes (10) angeht.

6. Verfahren nach einem der voranstehenden Ansprüche, **dadurch gekennzeichnet, dass** das Bodenreinigungsgerät (10) den Reinigungsplan bei negativer Feststellung selbstständig umstellt.

7. Verfahren nach einem der voranstehenden Ansprüche, **dadurch gekennzeichnet, dass** vom Bodenreinigungsgerät (10) ermittelt wird, ob eine Karte desjenigen Raumes (52, 54, 56) in der Speichereinheit (32) gespeichert ist, in dem es positioniert ist, und ob der Reinigungsplan einen diesem Raum (52, 54, 56) zugewiesenen Reinigungsauftrag aufweist, und dass bejahendenfalls dieser Reinigungsauftrag ausgeführt wird, insbesondere dass das Verfahren ausgeführt wird, wenn die Räume (52, 54, 56) physisch voneinander getrennt sind und physische Begrenzungen in den den Räumen (52, 54, 56) zugeordneten Karten vorhanden sind.

8. Verfahren nach einem der Ansprüche 1 bis 6, **dadurch gekennzeichnet, dass** bei negativer Feststellung eine Reinigung desjenigen Raumes (52, 54, 56) durchgeführt wird, in dem sich das Bodenreinigungsgerät (10) befindet, unabhängig davon, ob der Reinigungsplan einen diesem Raum (52, 54, 56) zugewiesenen Reinigungsauftrag aufweist.

9. Verfahren nach einem der voranstehenden Ansprüche, **dadurch gekennzeichnet, dass** zur Ermittlung, in welchem Raum (52, 54, 56) sich das Bodenreinigungsgerät (10) befindet, Merkmale von im Raum (52, 54, 56) angeordneten oder von diesem umfassten Gegenständen herangezogen werden, insbesondere Merkmale einer im Raum (52, 54, 56) angeordneten Lade- und/oder Entleerungsstation (60, 62) für das Bodenreinigungsgerät (10), die Position des Raumes (52, 54, 56) in mindestens einer räumlichen Dimension, die Orientierung des Raumes (52, 54, 56), Merkmale von Begrenzungen des Raumes (52, 54, 56) und/oder Merkmale einer Bodenfläche des Raumes (52, 54, 56).

10. Verfahren nach Anspruch 9, **dadurch gekennzeichnet, dass** Lade- und/oder Entleerungsstationen (60, 62) sich voneinander durch Markierungen (66, 68) unterscheiden und dass vom Bodenreinigungsgerät (10) anhand des Unterschiedes der Markierungen (66, 68) festgestellt wird, um welche Station (60, 62) es sich handelt, um so eine Zuordnung der Lade- und/oder Entleerungsstation (60, 62) zu demjenigen Raum (52, 54, 56) zu treffen und feststellen, in welchem Raum sich das Bodenreinigungsgerät (10) befindet.

11. Verfahren nach einem der voranstehenden Ansprüche, **dadurch gekennzeichnet, dass** eine schadhafte Reinigung des Raumes (52, 54, 56) vermieden werden kann.

12. Verfahren nach einem der voranstehenden Ansprüche, **dadurch gekennzeichnet, dass** zumindest eines der Folgenden gilt:
- das Bodenreinigungsgerät (10) umfasst eine Kommunikationseinheit (34) für eine drahtlose und/oder eine kontaktbehaftete Kommunikation des Benutzers mit dem Bodenreinigungsgerät (10);
- bei negativer Feststellung wird eine Mitteilung hierüber vom Bodenreinigungsgerät (10) an den Benutzer gesendet.

13. Verfahren nach einem der voranstehenden Ansprüche, **dadurch gekennzeichnet, dass** zur Ermittlung, in welchem Raum (52, 54, 56) sich das Bodenreinigungsgerät (10) befindet, vom Bodenreinigungsgerät (10) mindestens ein Höhensensor, ein Positionssensor, ein Kompasssensor, ein optischer Sensor (46), ein Magnetfeldsensor, ein akustischer Sensor, ein elektromagnetischer Sensor und/oder ein taktiler Sensor (48) eingesetzt wird.

14. Verfahren nach einem der voranstehenden Ansprüche, **dadurch gekennzeichnet, dass** die Signale von zwei oder mehr Sensoren dahingehend analysiert werden, ob sich das Bodenreinigungsgerät (10) in dem bestimmten Raum (52, 54, 56) befindet, und eine negative Feststellung erst dann getroffen wird, wenn die Analyse der Signale der zwei oder mehr Sensoren das Ergebnis liefert, dass dies nicht der Fall ist und/oder dass eine Höheninformation in Kombination mit oder als Bestandteil einer Karte eines Raumes (52, 54, 56) gespeichert ist.

15. Selbstfahrendes und selbstlenkendes Bodenreinigungsgerät zur Durchführung des Verfahrens nach einem der voranstehenden Ansprüche, umfassend:
- ein Fahrwerk (12) zum Verfahren des Bodenreinigungsgerätes (10) auf einer Bodenfläche;
- eine Reinigungseinheit (22) zum Reinigen der Bodenfläche;
- eine mit dem Fahrwerk (12) und der Reinigungseinheit (22) gekoppelte Steuereinheit (20);
- eine mit der Steuereinheit (20) gekoppelte Sensoreinheit (42); und
- eine mit der Steuereinheit (20) gekoppelte Speichereinheit (32), in der mindestens eine Karte mindestens eines zu reinigenden Raumes (52, 54, 56) gespeichert ist, sowie ein Reinigungsplan mit einem oder mehreren Reinigungsaufträgen, wobei einem bestimmten, anhand der mindestens einen Karte identifizierbaren Raum (52, 54, 56) mindestens ein Reinigungsauftrag zugewiesen ist,
**dadurch gekennzeichnet, dass** die Steuereinheit (20):
- bei der Abarbeitung des Reinigungsplans, mindestens ein Sensorsignal der Sensoreinheit (24) auf Merkmale kennzeichnend den Raum (52, 54, 56) untersucht, in dem sich das Bodenreinigungsgerät (10) befindet;
- das Vorhandensein der Merkmale in der mindestens einen in der Speichereinheit (32) gespeicherten Karte überprüft;
- vor Beginn der oder bei der Ausführung des Reinigungsauftrags feststellt, ob es sich bei dem Raum (52, 54, 56), in dem sich das Bodenreinigungsgerät (10) befindet, um den bestimmten Raum (52, 54, 56) handelt;
und dass bei negativer Feststellung eine Änderung des Reinigungsplans durch das Bodenreinigungsgerät (12) vorgenommen wird, wobei der dem bestimmten Raum (52, 54, 56) zugeordnete Reinigungsauftrag in einer Abfolge von Reinigungsaufträgen im Reinigungsplan nach hinten verschoben wird oder aus dem Reinigungsplan gelöscht wird; oder geprüft wird, ob der bestimmte Raum (52, 54, 56) erreichbar ist; oder die Ausführung des dem bestimmten Raum (52, 54, 56) zugeordneten Reinigungsauftrags unterlassen, unterbrochen oder beendet wird.

## Claims

1. A method for operating a self-propelling and self-steering floor-cleaning device, wherein at least one map of at least one room (52, 54, 56) to be cleaned is stored in a storage unit (32) of the floor-cleaning device (10), as well as a cleaning plan having one or more cleaning tasks, wherein at least one cleaning task is associated with a particular room (52, 54, 56) that is identifiable from the at least one map, and the floor-cleaning device (10) is located in a room (52, 54, 56), **characterized in that** the method comprises:
- when the cleaning plan is executed, examining, by means of a control unit (20) of the floor-cleaning device (10), at least one sensor signal of the sensor unit (42) of the floor-cleaning device (10) for features indicative of the room (52, 54, 56) in which the floor-cleaning device (10) is located;
- checking whether the features are present in the map stored in the at least one storage unit (32);
- determining, before or during the performance of the cleaning task, whether the room (52, 54, 56) in which the floor-cleaning device (10) is located is the particular room (52, 54, 56); and, if the result of this determination is negative:
- making a change of the cleaning plan via the floor-cleaning device (12), wherein the cleaning task associated with the particular room (52, 54, 56) is deferred in a sequence of cleaning tasks in the cleaning plan or is deleted from the cleaning plan; or checking if the particular room (52, 54, 56) is reachable; or not carrying out, interrupting or ending the performance of the cleaning task associated with the particular room (52, 54, 56).

2. A method in accordance with Claim 1, **characterized in that** the cleaning plan is executed in the sequence of the cleaning tasks to be performed.

3. A method in accordance with one of the preceding claims, **characterized in that** the floor-cleaning device (10) examines, if a cleaning task is present, whether the room (52, 54, 56) is reachable to perform the cleaning task.

4. A method in accordance with Claim 3, **characterized in that** when the floor-cleaning device cannot reach the room (52, 54, 56), the floor-cleaning device (10) makes a change to the cleaning plan if the result of determination is negative, in particular **in that** the cleaning task is deleted from the cleaning plan, or is deferred in a sequence of cleaning tasks in the cleaning plan.

5. A method in accordance with one of the preceding claims, **characterized in that** depending on the cleaning task the room is cleaned in accordance with at least one of the following:
- the room (52, 54, 56) may be provided to pass over the room in accordance with a predetermined cleaning route or cleaning pattern and in so doing to clean it;
- particular regions of the room (52, 54, 56) may be cleaned more intensively than other regions;
- particular regions of the room (52, 54, 56) may be omitted from cleaning;
- the room (52, 54, 56), depending on the nature of a floor surface, is cleaned in different ways;
- the room (52, 54, 56) is cleaned in a random manner, in a partly planned manner or in an entirely planned manner;
- the room (52, 54, 56) or regions thereof are cleaned in different ways as regards use of the cleaning unit of the floor-cleaning device (10).

6. A method in accordance with one of the preceding claims **characterized in that** the floor-cleaning device (10) automatically changes the cleaning plan if the result of determination is negative.

7. A method in accordance with one of the preceding claims, **characterized in that** the floor-cleaning device (10) determines whether a map of the room (52, 54, 56) in which it is positioned is stored in the storage unit (32), and whether the cleaning plan has a cleaning task associated with this room (52, 54, 56), and **in that** if so this cleaning task is performed, in particular in that the method is performed if the rooms (52, 54, 56) are physically separated from one another and there are physical limits in the maps associated with the rooms (52, 54, 56).

8. A method in accordance with one of Claims 1 to 6, **characterized in that** if the result of determination is negative, cleaning of the room (52, 54, 56) in which the floor-cleaning device (10) is located is performed, regardless of whether the cleaning plan has a cleaning task associated with this room (52, 54, 56).

9. A method in accordance with one of the preceding claims, **characterized in that**, in order to determine in which room (52, 54, 56) the floor-cleaning device (10) is located, features of objects arranged or included in the room (52, 54, 56) are taken into consideration, in particular features of a charging and/or emptying station (60, 62) that is arranged in the room (52, 54, 56) for the floor-cleaning device (10), the position of the room (52, 54, 56) in at least one spatial dimension, the orientation of the room (52, 54, 56), features of boundaries of the room (52, 54, 56) and/or features of a floor surface of the room (52, 54, 56).

10. A method in accordance with Claim 9, **characterized in that** the charging and/or emptying station (60, 62) differ from each other through marks and that the floor-cleaning device (10) based on the difference of the marks (66, 68) determines which station it is in order to associate the charging and/or emptying station (60, 62) to the room and to find out in which room the floor-cleaning device (10) is located.

11. A method in accordance with one of the preceding claims, **characterized in that** a defective cleaning of the room (52, 54, 56) may be avoided.

12. A method in accordance with one of the preceding claims, **characterized in that** at least one of the following applies:
- the floor-cleaning device (10) comprises a communication unit (34) for a wireless and/or contact-based communication of the user with the floor-cleaning device (10);
- if the result of determination is negative, the floor-cleaning device (10) sends a communication thereof to the user.

13. A method in accordance with one of the preceding claims, **characterized in that**, to determine in which room (52, 54, 56) the floor-cleaning device (10) is located, at least a height sensor, a position sensor, a compass sensor, an optical sensor (46), a magnetic field sensor, an acoustic sensor, an electromagnetic sensor and/or a touch sensor (48) is used by the floor-cleaning device (10).

14. A method in accordance with one of the preceding claims, **characterized in that** the signals of two or more sensors are analyzed to find out whether the floor-cleaning device (10) is located in the particular room (52, 54, 56), and a negative determination is only established if the analysis of the signals or the two or more sensors gives the result that this is not the case and/or **in that** height information is stored in combination with or as a component of a map of a room (52, 54, 56).

15. A self-propelling and self-steering floor-cleaning device for performing the method in accordance with one of the preceding claims, comprising:
- a travelling gear (12) for moving the floor-cleaning device (10) on a floor surface;
- a cleaning unit (22) for cleaning the floor surface;
- a control unit (20) coupled to the travelling gear (12) and the cleaning unit (22);
- a control unit (20) coupled to the sensor unit (42); and
- a storage unit (32) that is coupled to the control unit (20), in which at least one map of at least one room (52, 54, 56) to be cleaned is stored, as is a cleaning plan having one or more cleaning tasks, wherein at least one cleaning task is associated with a particular room (52, 54, 56) that is identifiable from the at least one map,
**characterized in that** the control unit (20)
- when the cleaning plan is executed, examines at least one sensor signal of the sensor unit (42) for features indicative of the room (52, 54, 56) in which the floor-cleaning device (10) is located;
- checks for presence of the features in the at least one map stored in the storage unit (32);
- determines before or during the performance of the cleaning task whether the room (52, 54, 56) in which the floor-cleaning device (10) is located is the particular room (52, 54, 56);
and **in that**, if the result of this determination is negative, a change in the cleaning plan is made via the floor-cleaning device (12), wherein the cleaning task associated with the particular room (52, 54, 56) is deferred in a sequence of cleaning tasks in the cleaning plan or is deleted from the cleaning plan; or it is checked if the particular room (52, 54, 56) is reachable; or the performance of the cleaning task associated with the particular room (52, 54, 56) is not carried out, is interrupted or is ended.

## Revendications

1. Procédé pour faire fonctionner un appareil de nettoyage de sol autopropulsé et autoguidé, où au moins une carte d'au moins une pièce (52, 54, 56) à nettoyer est mémorisée dans une unité de mémorisation (32) de l'appareil de nettoyage de sol (10) ainsi qu'un plan de nettoyage avec un ou plusieurs ordres de nettoyage, où à une pièce spécifique (52, 54, 56), identifiable à l'aide de la au moins une carte, au moins un ordre de nettoyage est affecté et l'appareil de nettoyage de sol (10) se trouve dans une pièce (52, 54, 56), **caractérisé en ce que** le procédé comprend:
- lors de l'exécution du plan de nettoyage, l'examen, par une unité de commande (20) de l'appareil de nettoyage de sol (10), d'au moins un signal de détecteur d'une unité de détection (42) de l'appareil de nettoyage de sol (10) concernant des caractéristiques caractérisant la pièce (52, 54, 56) dans laquelle se trouve l'appareil de nettoyage de sol (10);
- la vérification de ce que les caractéristiques sont présentes dans la au moins une carte mémorisée dans l'unité de mémorisation (32);
- la constatation, avant le début de ou lors de l'exécution de l'ordre de nettoyage, de ce que la pièce (52, 54, 56) dans laquelle l'appareil de nettoyage de sol (10) se trouve est la pièce spécifique (52, 54, 56) ; et, en cas de constatation négative :
- la réalisation d'une modification du plan de nettoyage par l'appareil de nettoyage de sol (12), où l'ordre de nettoyage affecté à la pièce spécifique (52, 54, 56) est déplacé vers l'arrière dans une suite d'ordres de nettoyage dans le plan de nettoyage ou supprimé du plan de nettoyage ; ou l'examen de ce la pièce spécifique (52, 54, 56) peut être atteinte ; ou l'omission, l'interruption ou la fin de l'exécution de l'ordre de nettoyage attribué à la pièce spécifique (52, 54, 56).

2. Procédé selon la revendication 1, **caractérisé en ce que** le plan de nettoyage est réalisé dans la suite des ordres de nettoyage à exécuter.

3. Procédé selon l'une des revendications précédentes, **caractérisé en ce que**, en présence d'un ordre de nettoyage, l'appareil de nettoyage de sol (10) examine si la pièce (52, 54, 56) peut être atteinte pour exécuter l'ordre de nettoyage.

4. Procédé selon la revendication 3, **caractérisé en ce que**, lorsque l'appareil de nettoyage de sol ne peut pas atteindre la pièce (52, 54, 56), une modification du plan de nettoyage est entreprise par l'appareil de nettoyage de sol (10), en particulier **en ce que** l'ordre de nettoyage est supprimé du plan de nettoyage ou est déplacé vers l'arrière dans une suite d'ordres de nettoyage dans le plan de nettoyage.

5. Procédé selon l'une des revendications précédentes, **caractérisé en ce que**, en fonction de l'ordre de nettoyage, la pièce est nettoyée selon au moins l'un des suivants :
- la pièce (52, 54, 56) est parcourue conformément à un trajet de nettoyage ou un modèle de nettoyage prédéterminé et nettoyée ;
- des zones déterminées de la pièce (52, 54, 56) sont nettoyées de manière plus intensive que d'autres zones ;
- des zones déterminées de la pièce (52, 54, 56) sont exclues du nettoyage ;
- la pièce (52, 54, 56) est nettoyée de manière différente selon la structure d'une surface de sol ;
- la pièce (52, 54, 56) est nettoyée au hasard, de manière partiellement planifiée ou de manière totalement planifiée ;
- la pièce (52, 54, 56) ou des zones de celle-ci sont nettoyées de manière différente, ce qui entraîne l'utilisation d'une unité de nettoyage de l'appareil de nettoyage de sol (10).

6. Procédé selon l'une des revendications précédentes, **caractérisé en ce que** l'appareil de nettoyage de sol (10) modifie le plan de nettoyage soi-même dans le cas d'une constatation négative.

7. Procédé selon l'une des revendications précédentes, **caractérisé en ce que** l'appareil de nettoyage de sol (10) détermine si une carte de la pièce (52, 54, 56) dans laquelle il est positionné est mémorisée dans l'unité de mémorisation (32) et si le plan de nettoyage présente un ordre de nettoyage affecté à cette pièce (52, 54, 56), et **en ce que**, en cas de réponse positive, cet ordre de nettoyage est exécuté, en particulier **en ce que** le procédé est exécuté quand les pièces (52, 54, 56) sont physiquement séparées les unes des autres et il y a des limitations physiques dans les cartes attribuées aux pièces (52, 54, 56).

8. Procédé selon l'une des revendications 1 à 6, **caractérisé en ce qu'**en cas de constatation négative, un nettoyage de la pièce (52, 54, 56) dans laquelle se trouve l'appareil de nettoyage de sol (10) est effectué, indépendamment de ce que le plan de nettoyage présente un ordre de nettoyage affecté à cette pièce (52, 54, 56).

9. Procédé selon l'une des revendications précédentes, **caractérisé en ce que** pour déterminer dans quelle pièce (52, 54, 56) se trouve l'appareil de nettoyage de sol (10), des caractéristiques d'objets disposés dans la pièce (52, 54, 56) ou inclus par celle-ci sont utilisées, en particulier des caractéristiques d'un poste de chargement et/ou de vidage (60, 62) disposé dans la pièce (52, 54, 56) pour l'appareil de nettoyage de sol (10), la position de la pièce (52, 54, 56) dans au moins une dimension spatiale, l'orientation de la pièce (52, 54, 56), des caractéristiques de limitations de la pièce (52, 54, 56), des caractéristiques d'une surface de sol de la pièce (52, 54, 56).

10. Procédé selon la revendication 9, **caractérisé en ce que** des postes de chargement et/ou de vidage (60, 62) diffèrent les uns des autres par des marquages (66, 68) et **en ce que** l'appareil de nettoyage de sol (10) établit à l'aide de la différence des marquages (66, 68) de quel poste (60, 62) il s'agit, pour parvenir à une affectation du poste de chargement et/ou de vidage (60, 62) à la pièce (52, 54, 56) dans laquelle se trouve l'appareil de nettoyage de sol (10).

11. Procédé selon l'une des revendications précédentes, **caractérisé en ce qu'**un nettoyage défectueux de la pièce (52, 54, 56) peut être évité.

12. Procédé selon l'une des revendications précédentes, **caractérisé en ce qu'**au moins l'un des suivants s'applique:
- l'appareil de nettoyage de sol (10) comprend une unité de communication (34) pour une communication sans fil et/ou une communication par contact de l'utilisateur avec l'appareil de nettoyage de sol (10) ;
- en cas de constatation négative un avis la concernant est envoyé à l'utilisateur par l'appareil de nettoyage de sol (10).

13. Procédé selon l'une des revendications précédentes, **caractérisé en ce que** pour déterminer dans quelle pièce (52, 54, 56) se trouve l'appareil de nettoyage de sol (10), au moins un détecteur de hauteur, un détecteur de position, un détecteur azimutal, un détecteur optique (46), un détecteur de champ magnétique, un détecteur acoustique, un détecteur électromagnétique et/ou un détecteur tactile (48) est utilisé par l'appareil de nettoyage de sol (10).

14. Procédé selon l'une des revendications précédentes, **caractérisé en ce que** les signaux de deux ou plusieurs détecteurs sont analysés pour savoir si l'appareil de nettoyage de sol (10) se trouve dans la pièce spécifique (52, 54, 56), et une constatation négative n'est faite que lorsque l'analyse des signaux des deux ou plusieurs détecteurs délivre le résultat que ce n'est pas le cas et/ou **en ce qu'**une information de hauteur en combinaison avec ou comme constituant d'une carte de la pièce (52, 54, 56) est mémorisée.

15. Appareil de nettoyage de sol autopropulsé et autoguidé pour la mise en oeuvre du procédé selon l'une des revendications précédentes, comprenant:
- un dispositif de déplacement (12) pour déplacer l'appareil de nettoyage de sol (10) sur une surface de sol;
- une unité de nettoyage (22) pour nettoyer la surface de sol;
- une unité de commande (20) couplée au dispositif de déplacement (12) et à l'unité de nettoyage (22);
- une unité de détection (42) couplée à l'unité de commande (20); et
- une unité de mémorisation (32) couplée à l'unité de commande (20), dans laquelle au moins une carte d'au moins une pièce (52, 54, 56) à nettoyer est mémorisée, ainsi qu'un plan de nettoyage avec un ou plusieurs ordres de nettoyage, où au moins un ordre de nettoyage est affecté à une pièce (52, 54, 56) déterminée, identifiable à l'aide de la au moins une carte,
**caractérisé en ce que** l'unité de commande (20):
- pendant l'exécution du plan de nettoyage, examine au moins un signal de détecteur de l'unité de détection (24) concernant des caractéristiques caractérisant la pièce (52, 54, 56) dans laquelle se trouve l'appareil de nettoyage de sol (10);
- vérifie la présence des caractéristiques dans la au moins une carte mémorisée dans l'unité de mémorisation (32);
- avant le début de ou lors de l'exécution de l'ordre de nettoyage, constate si la pièce (52, 54, 56) dans laquelle l'appareil de nettoyage de sol (10) se trouve est la pièce spécifique (52, 54, 56);
et **en ce que**, si la constatation est négative, une modification du plan de nettoyage est réalisée par l'appareil de nettoyage de sol (12), où l'ordre de nettoyage attribué à la pièce spécifique (52, 54, 65) est déplacé vers l'arrière dans une suite d'ordres de nettoyage dans le plan de nettoyage ou est supprimé du plan de nettoyage; ou on examine si la pièce spécifique (52, 54, 56) peut être atteinte; ou l'exécution de l'ordre de nettoyage attribué à la pièce spécifique (52, 54, 56) est omise, interrompue ou terminée.
